# EUROPEAN PATENT APPLICATION

(11) **EP 4 838 601 A1**
(43) Date of publication of application: **11.11.2026**
(21) Application number: 26171616.1
(22) Date of filing: 10.04.2026
(51) Int. Cl.: H01M 10/04, H01M 10/0585, H01M 50/466

(54) **SECONDARY BATTERY**

(30) Priority: 07.05.2025 JP 2025077574
(71) Applicant: Toyota Jidosha Kabushiki Kaisha, Toyota-shi, Aichi-ken 471-8571 (JP)
(72) Inventor: HIRUKAWA, Tomofumi, TOYOTA-SHI, AICHI-KEN, 471-8571 (JP); IKEYAMA, Suguru, TOYOTA-SHI, AICHI-KEN, 471-8571 (JP); KATO, Kazuhito, TOYOTA-SHI, AICHI-KEN, 471-8571 (JP); SAKASHITA, Yasuhiro, TOYOTA-SHI, AICHI-KEN, 471-8571 (JP); SHIMURA, Yosuke, TOYOTA-SHI, AICHI-KEN, 471-8571 (JP); NAKANO, Takahiko, TOYOTA-SHI, AICHI-KEN, 471-8571 (JP)
(74) Representative: Cabinet Beau de Loménie

(57) **Abstract**

A secondary battery includes an electrode stack (16) in which a plurality of electrodes (20,30) is stacked in a first direction with a separator (14) that is pleated interposed between the electrodes. The electrodes each include an electrode active material layer (24) coated on at least one surface of a sheet-shaped collector. At least a first electrode and a second electrode (20) included in the electrodes each have an undulation in which a convexly curved portion (26) curved in a convex shape in the first direction and a concavely curved portion (28) curved in a concave shape in the first direction are repeated along a second direction intersecting the first direction. The first electrode and the second electrode are stacked in a state in which positions of the convexly curved portions of the first electrode and the second electrode are aligned in the second direction.

## Description

### BACKGROUND OF THE INVENTION

### 1. Field of the Invention

The technology disclosed in the present specification relates to a secondary battery.

### 2. Description of Related Art

Japanese Unexamined Patent Application Publication No. 2016-103425 (JP 2016-103425 A) discloses a pleated stack structure of a secondary battery. According to JP 2016-103425 A, a pleated strip-shaped separator alternately sandwiches a positive electrode and a negative electrode to constitute a stack.

### SUMMARY OF THE INVENTION

Roll pressing using a roller is performed on an electrode including an electrode active material layer coated on a surface of a sheet-shaped collector to increase the density of the electrode active material layer or to uniformize the thickness of the electrode active material layer. In the electrode that has been subjected to roll pressing, wavy undulations may occur. When electrodes having the undulations are stacked to form an electrode stack, a positional relationship between the electrodes and a positional relationship between the electrode and a separator are destabilized due to the undulations of the electrodes, and misregistration between the electrodes or misregistration between the electrode and the separator occurs.

In view of such a problem, the present specification provides a technology for suppressing the misregistration.

The present specification discloses a secondary battery. A secondary battery includes an electrode stack in which a plurality of electrodes is stacked in a first direction with a separator that is pleated interposed between the electrodes. The electrodes each include an electrode active material layer coated on at least one surface of a sheet-shaped collector. At least a first electrode and a second electrode included in the electrodes each have an undulation in which a convexly curved portion curved in a convex shape in the first direction and a concavely curved portion curved in a concave shape in the first direction are repeated along a second direction intersecting the first direction.
The first electrode and the second electrode are stacked in a state in which positions of the convexly curved portions of the first electrode and the second electrode are aligned in the second direction.

According to the configuration, by aligning the positions of the undulations of the first electrode with the positions of the undulations of the second electrode, it is possible to stabilize the positions of each electrode and each separator and to suppress the misregistration.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view schematically showing an electrode subjected to roll pressing from a viewpoint facing one surface of the electrode;
FIG. 2 is a cross-sectional view of a secondary battery;
FIG. 3 is an exploded perspective view of an electrode stack;
FIG. 4 is a sectional view of a part of the electrode stack; and
FIG. 5 is a sectional view of a part of an electrode stack according to an example different from FIG. 4.

### DETAILED DESCRIPTION OF EMBODIMENTS

Main features of embodiments described below are listed below. These features can be optionally combined.

According to the secondary battery disclosed in the present specification, the electrode stack may be provided by alternately stacking, in the first direction, a positive electrode that is the electrode and a negative electrode that is the electrode, with the separator interposed between the positive electrode and the negative electrode. Each of the first electrode and the second electrode may be the positive electrode.
With the configuration, misregistration between the positive electrodes can be accurately suppressed.

According to the secondary battery disclosed in the present specification, the electrode stack may be provided by alternately stacking, in the first direction, a positive electrode that is the electrode and a negative electrode that is the electrode, with the separator interposed between the positive electrode and the negative electrode. The first electrode may be the positive electrode, and the second electrode may be the negative electrode. With the configuration, misregistration between the positive electrode and the negative electrode can be accurately suppressed.

Embodiments will be described with reference to the drawings. Each drawing is merely an example, and the present embodiment is not limited to the content shown in the drawing. In addition, since each drawing is an example, some parts may be omitted.

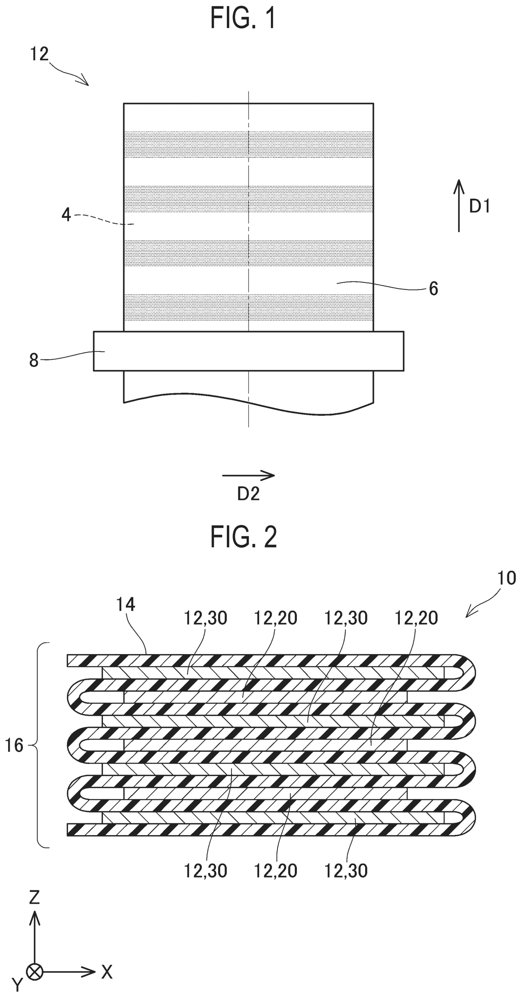

FIG. 1 schematically shows an electrode 12 subjected to roll pressing from a viewpoint facing one surface of the electrode 12. The electrode 12 includes a long sheet-shaped collector 4 and an electrode active material layer 6 coated on at least one surface of the collector 4. The collector 4 is a metal foil. In FIG. 1, reference sign D1 indicates a longitudinal direction D1 of the electrode 12, and reference sign D2 indicates a width direction D2 of the electrode 12 orthogonal to the longitudinal direction D1.

According to FIG. 1, a roller 8 that is long in the width direction D2 is in contact with the electrode 12 transported along the longitudinal direction D1. Roll pressing using the roller 8 is performed on the electrode 12 with a predetermined press pressure to increase the density of the electrode active material layer 6 or to uniformize the thickness thereof. The roller 8 has a cylindrical shape and rotates in a state of being in contact with the electrode 12. In accordance with the rotation of the roller 8, a periodic "undulation" may occur in the electrode 12 in the longitudinal direction D1. In FIG. 1, a periodic stripe pattern is applied in gray to a region of the electrode 12 that has passed through the position of the roller 8. The stripe pattern is a convenient expression for exemplarily showing the undulations occurring in the electrode 12.

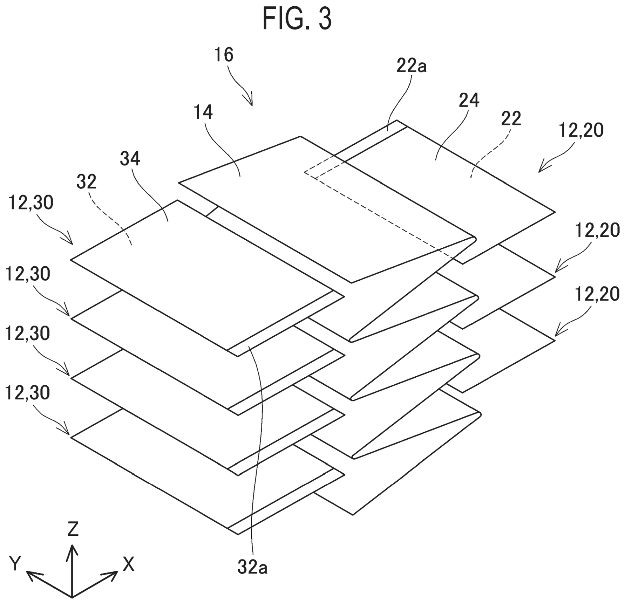

As shown in FIGS. 2 and 3, the electrode 12 is used as a part of a configuration of a secondary battery 10. FIG. 2 schematically shows a cross-section of the secondary battery 10. The secondary battery 10 is, for example, a chargeable and dischargeable lithium-ion battery. The secondary battery 10 includes an electrode stack 16 provided by stacking a plurality of electrodes 12 in a first direction with a separator 14 sandwiched therebetween. FIG. 3 schematically shows the electrode stack 16 in an exploded perspective view. The electrodes 12 are positive electrodes 20 and negative electrodes 30. The undulations of the electrodes 12 are not shown in FIGS. 2 and 3.

The secondary battery 10 includes an unshown flexible housing, and the electrode stack 16 is sealed inside the housing. An electrolytic solution (not shown) is sealed inside the housing. The housing is, for example, a laminate sheet. In FIGS. 2 to 5, X, Y, and Z axes orthogonal to each other are shown for convenience of description. The Z-axis direction corresponds to the first direction. The first direction may be referred to as a stacking direction. FIG. 2 is a cross-sectional view taken along a cross-section orthogonal to the Y-axis.

As shown in FIGS. 2 and 3, the electrode stack 16 includes substantially rectangular positive electrodes 20 and substantially rectangular negative electrodes 30 that are alternately stacked in the first direction with the pleated strip-shaped separator 14 interposed therebetween, the separator 14 having mountain folds and valley folds that are alternately repeated. In this case, each of the multiple positive electrodes 20 is sandwiched between surfaces on one side of both surfaces of the separator 14, and each of the multiple negative electrodes 30 is sandwiched between surfaces on the other side of both surfaces of the separator 14. Each of the positive electrodes 20 and the negative electrodes 30 extends in the X-axis direction and the Y-axis direction. Regarding the electrodes 12, the Y-axis direction may be considered to correspond to the direction D1 in FIG. 1.

The separator 14 is made of a material having both permeability that allows movement of a charge carrier (here, a lithium ion) accompanying charging and discharging and insulating properties that suppress short-circuiting due to contact between the positive electrodes 20 and the negative electrodes 30. Examples of the material of the separator 14 include polypropylene and polyethylene.

According to FIG. 3, the positive electrodes 20 each include a positive electrode collector 22 and a positive electrode active material layer 24 coated on the positive electrode collector 22. The positive electrode collector 22 corresponds to an example of the collector 4, and the positive electrode active material layer 24 corresponds to an example of the electrode active material layer 6. The positive electrode active material layer 24 is, for example, coated on both surfaces of the positive electrode collector 22. The positive electrode collector 22 is, for example, an aluminum foil. The positive electrode active material layer 24 contains a positive electrode active material. Examples of the positive electrode active material include a lithium nickel-based composite oxide, a lithium cobalt-based composite oxide, and a lithium manganese-based composite oxide.

The negative electrodes 30 each include a negative electrode collector 32 and a negative electrode active material layer 34 coated on the negative electrode collector 32. The negative electrode collector 32 corresponds to an example of the collector 4, and the negative electrode active material layer 34 corresponds to an example of the electrode active material layer 6. The negative electrode active material layer 34 is, for example, coated on both surfaces of the negative electrode collector 32. The negative electrode collector 32 is, for example, a copper foil. The negative electrode active material layer 34 contains a negative electrode active material. Examples of the negative electrode active material include a carbon material, such as graphite, hard carbon, and soft carbon, a material that forms an alloy with lithium, such as silicon (Si), and a lithium alloy. The electrode active material may include one kind of material or may include a plurality of kinds of materials. The electrode active material layer may include a conductive auxiliary agent, a binder, and the like.

Each of the positive electrodes 20 and the negative electrodes 30 includes an uncoated portion 22a, 32a that protrudes in a direction intersecting the first direction. The uncoated portion 22a of the positive electrode 20 is a region of the positive electrode collector 22 on which the positive electrode active material layer 24 is not coated. The uncoated portion 32a of the negative electrode 30 is a region of the negative electrode collector 32 on which the negative electrode active material layer 34 is not coated. In FIG. 1, the uncoated portion in the electrode 12 is omitted. For example, the Y-axis direction (Y-axis + direction and Y-axis - direction) corresponds to a direction intersecting the first direction. According to FIG. 3, the uncoated portion 22a of the positive electrode 20 protrudes in the Y-axis + direction, and the uncoated portion 32a of the negative electrode 30 protrudes in the Y-axis - direction. Although not shown, the uncoated portion 22a included in each of the positive electrodes 20 is electrically connected to a positive electrode terminal outside a region that is sandwiched by the separator 14 is sandwiched, for example, via a collector tab. Similarly, although not shown, the uncoated portion 32a included in each of the negative electrodes 30 is electrically connected to a negative electrode terminal outside a region that is sandwiched by the separator 14, for example, via a collector tab.

One electrode 12 among the electrodes 12 included in the electrode stack 16 is referred to as a "first electrode". Similarly, one electrode 12 different from the first electrode among the electrodes 12 is referred to as a "second electrode". Hereinafter, the description will be continued on the assumption that at least the first electrode and the second electrode among the electrodes 12 each have undulations. A shape in which a convexly curved portion curved in a convex shape in the first direction and a concavely curved portion curved in a concave shape in the first direction are repeated along a second direction intersecting the first direction is undulations. In the present embodiment, the first electrode and the second electrode are stacked in a state in which positions of the convexly curved portions of the first electrode and the second electrode are aligned in the second direction. The positions of the concavely curved portions of the first electrode and the second electrode may be aligned in the second direction instead of aligning the positions of the convexly curved portions of the first electrode and the second electrode in the second direction.

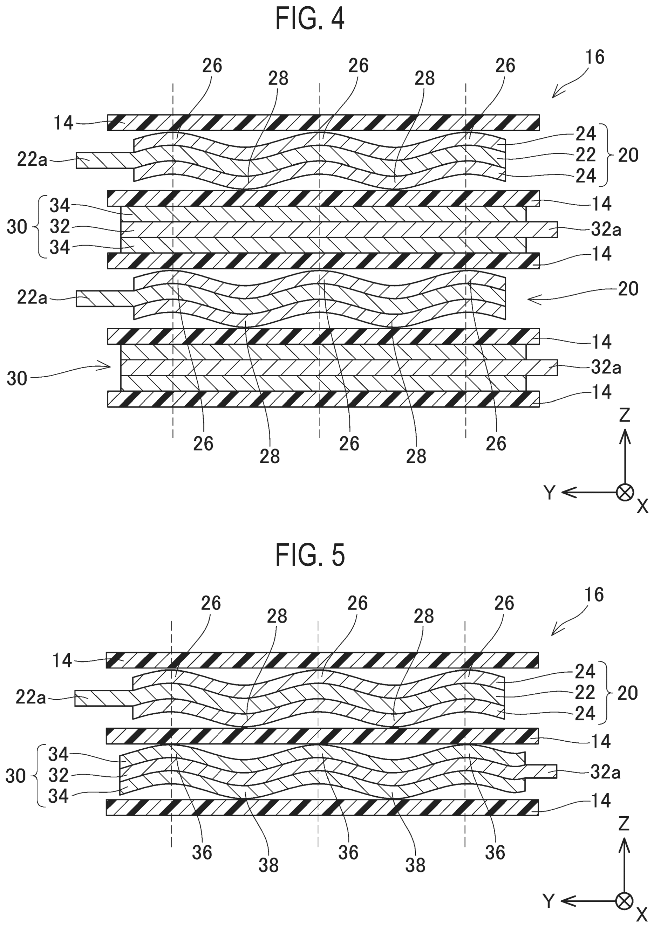

FIG. 4 shows a part of the electrode stack 16 in a section orthogonal to the X-axis. According to FIG. 4, each of the positive electrodes 20 has undulations. That is, each positive electrode 20 has a shape in which a convexly curved portion 26 curved in a convex shape in the first direction (Z-axis direction) and a concavely curved portion 28 curved in a concave shape in the first direction are repeated along the second direction (Y-axis direction) intersecting the first direction. According to FIG. 4, each of the first electrode and the second electrode corresponds to the positive electrode 20, and the positive electrodes 20, the negative electrodes 30, and the separator 14 are stacked such that the positions of the convexly curved portions 26 of the positive electrode 20 are aligned in the Y-axis direction. The configuration shown in FIG. 4 is repeated in the Z-axis direction.

The positive electrodes 20 each include the metal oxide in the positive electrode active material layers 24. On the other hand, the negative electrodes 30 each include graphite or the like in the negative electrode active material layers 34. Therefore, the positive electrode active material layers 24 are harder than the negative electrode active material layers 34. Therefore, a pressure applied to the positive electrodes 20 to increase the density of the active material in the positive electrode active material layers 24 during the roll pressing is higher than the pressure applied to the negative electrodes 30 including the negative electrode active material layers 34 during the roll pressing. From such a situation, it is found that the undulations tend to occur in the positive electrodes 20 after the roll pressing, as compared with the negative electrodes 30. Therefore, as shown in FIG. 4, positions of undulations of the positive electrodes 20 are aligned with each other.

As shown in FIG. 1, since the undulations occurring in the electrodes 12 have periodicity, the electrodes 12 can be stacked with the undulation pitch matched between the respective electrodes 12 when the electrode stack 16 is formed. In addition, the electrode 12 that is long in the longitudinal direction D1 shown in FIG. 1 may be in a state in which the electrodes 12 of a size used for forming the electrode stack 16 are continuously connected in the longitudinal direction D1, and may be cut and separated into the multiple electrodes 12 (for example, the multiple positive electrodes 20). In a case of assuming such an aspect, the electrode 12 shown in FIG. 1 is cut at certain intervals in accordance with the undulation pitch, so that the positions of the undulations of the electrodes 12 can be aligned with each other when the electrodes 12 that has been cut are stacked.

As can be seen from FIGS. 2 and 4, the size of the negative electrode 30 is larger than the size of the positive electrode 20 in an X-Y plane orthogonal to the Z-axis direction. As shown in FIG. 4, when the entire electrode stack 16 is pressed with a force in a direction parallel to the Z-axis direction after aligning the positions of the undulations of the positive electrodes 20 with each other, the separator 14 and the negative electrode 30 also undulate in accordance with the shape of the undulations of the positive electrodes 20. As a result, misregistration between the positive electrodes 20 in the Y-axis direction is suppressed, the positional relationship among the positive electrodes 20, the separator 14, and the negative electrodes 30 is less likely to fluctuate, and misregistration among the positive electrodes 20, the separator 14, and the negative electrodes 30 in the Y-axis direction is also suppressed.

FIG. 5 shows a part of the electrode stack 16 according to an example different from FIG. 4 in a section orthogonal to the X-axis. According to FIG. 5, each of the positive electrode 20 and the negative electrode 30 has undulations. The negative electrode 30 has a shape in which a convexly curved portion 36 curved in a convex shape in the first direction (Z-axis direction) and a concavely curved portion 38 curved in a concave shape in the first direction are repeated along the second direction (Y-axis direction) intersecting the first direction. According to FIG. 5, the first electrode corresponds to the positive electrode 20, and the second electrode corresponds to the negative electrode 30. The positive electrode 20, the negative electrode 30, and the separator 14 are stacked such that the positions of the convexly curved portions 26 of the positive electrode 20 and the convexly curved portions 36 of the negative electrode 30 are aligned in the Y-axis direction. The configuration shown in FIG. 5 is repeated in the Z-axis direction. That is, as shown in FIG. 5, when each of the positive electrode 20 and the negative electrode 30 has undulations, the positive electrode 20 and the negative electrode 30 may be stacked such that the positions of the undulations of the positive electrode 20 and the negative electrode 30 are aligned with each other.

As shown in FIG. 5, when the entire electrode stack 16 is pressed with a force in a direction parallel to the Z-axis direction after aligning the positions of the undulations of the positive electrode 20 and the negative electrode 30 with each other, the separator 14 also undulates in accordance with the shape of the undulations of the positive electrode 20 and the negative electrode 30. As a result, misregistration between the positive electrode 20 and the negative electrode 30 in the Y-axis direction is suppressed, and the position of the separator 14 with respect to the positive electrode 20 and the negative electrode 30 is also less likely to fluctuate.

As described above, according to the present embodiment, when the electrode stack 16 is formed, the positions of the undulations of the first electrode and the positions of the undulations of the second electrode are aligned with each other. As a result, the position of each of the electrodes and the separator is stabilized, and misregistration between the electrodes or misregistration between the electrode and the separator can be suppressed. As a result, the quality of the secondary battery 10 is improved.

In the present embodiment, the phrase "aligning the positions of the undulations of the first electrode and the positions of the undulations of the second electrode " does not solely refer to completely matching the positions. For example, it can be said that the positions of the undulations of the first electrode and the second electrode are aligned with each other when the positions of the first electrode and the second electrode match each other to such an extent that their undulations are fitted together through another layer (the separator 14 or another electrode 12).

The undulations of the electrode 12 are not limited to the undulations caused by the roll pressing as described above. That is, in the present embodiment, the cause of the undulations occurring in the electrode 12 is not specified. For example, wavy undulations are purposely formed in the plurality of electrodes 12 that does not originally have undulations before the electrode stack 16 is formed, and then the electrodes 12 having undulations can be stacked as described in the present embodiment.

Although specific examples of the technology disclosed in the present specification have been described in detail above, these examples are merely illustrative and do not limit the scope of the claims. The technology described in claims includes various modifications and changes of the specific examples illustrated above. In addition, the technical elements described in the present specification or in the drawings exhibit the technical usefulness alone or in various combinations, and are not limited to the combinations described in the claims at the time of filing of application. In addition, the technique described in the present specification or the drawings achieves a plurality of purposes at the same time, and achieving one of the purposes has technical usefulness.

## Claims

1. A secondary battery (10) comprising:
an electrode stack (16) in which a plurality of electrodes (12, 20, 30) is stacked in a first direction with a separator (14) that is pleated interposed between the electrodes, the electrodes each including an electrode active material layer (6,24) coated on at least one surface of a sheet-shaped collector (4,22), wherein:
at least a first electrode and a second electrode included in the electrodes each have an undulation in which a convexly curved portion (26) curved in a convex shape in the first direction and a concavely curved portion (28) curved in a concave shape in the first direction are repeated along a second direction intersecting the first direction; and
the first electrode and the second electrode are stacked in a state in which positions of the convexly curved portions of the first electrode and the second electrode are aligned in the second direction.

2. The secondary battery according to claim 1, wherein:
in the electrode stack (16), a positive electrode (20) that is the electrode and a negative electrode (30) that is the electrode are alternately stacked in the first direction with the separator (14) interposed between the positive electrode and the negative electrode; and
each of the first electrode and the second electrode is the positive electrode.

3. The secondary battery according to claim 1, wherein:
in the electrode stack (16), a positive electrode (20) that is the electrode and a negative electrode (30) that is the electrode are alternately stacked in the first direction with the separator interposed between the positive electrode and the negative electrode;
the first electrode is the positive electrode; and
the second electrode is the negative electrode.
